(19) Europäisches Patentamt
European Patent Office
Office européen des brevets

(11) EP 4 310 124 A1

(12) EUROPÄISCHE PATENTANMELDUNG

(43) Veröffentlichungstag:
**24.01.2024 Patentblatt 2024/04**

(21) Anmeldenummer: **22186009.1**

(22) Anmeldetag: **20.07.2022**

(51) Internationale Patentklassifikation (IPC):
***C08G 59/50*** *(2006.01)* ***C04B 26/14*** *(2006.01)*
***C08G 59/68*** *(2006.01)*

(52) Gemeinsame Patentklassifikation (CPC):
**C08G 59/50; C04B 26/14; C04B 40/065; C04B 40/0666; C08G 59/68;** C04B 24/121; C04B 24/281

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
- **Behrens, Nicole**
  **81245 München (DE)**
- **Bornschlegl, Alexander**
  **81245 München (DE)**

(74) Vertreter: **Hilti Aktiengesellschaft**
**Corporate Intellectual Property**
**Feldkircherstrasse 100**
**Postfach 333**
**9494 Schaan (LI)**

# (54) MEHRKOMPONENTEN-ZUSAMMENSETZUNG FÜR BEFESTIGUNGSZWECKE MIT NICHT STÖCHIOMETRISCHEN EEW/AHEW ANTEILEN, DARAUS HERGESTELLTE MÖRTELMASSE UND DARAUS HERGESTELLTER CHEMISCHER DÜBEL

(57) Die vorliegende Erfindung betrifft eine Mehrkomponenten-Zusammensetzung für Befestigungszwecke mit einer Epoxidharzkomponente (A) und einer Härterkomponente (B), wobei die Epoxidharzkomponente (A) und die Härterkomponente (B) nicht stöchiometrisch in Bezug auf ihr EEW- und AHEW-Werte verwendet werden. Das nichtstöchiometrische Verhältnis führt zu einer Erhöhung der Auszugsfestigkeit eines chemischen Dübels, welcher aus der Epoxidharzkomponente (A) und der Härterkomponente (B) hergestellt wurde, insbesondere bei erhöhten Temperaturen.

EP 4 310 124 A1

## Beschreibung

Die vorliegende Erfindung betrifft eine Mehrkomponenten-Zusammensetzung für Befestigungszwecke mit einer Epoxidharzkomponente (A) und einer Härterkomponente (B), wobei die Epoxidharzkomponente (A) und die Härterkomponente (B) nicht stöchiometrisch in Bezug auf ihr EEW- und AHEW-Werte verwendet werden. Die Erfindung betrifft ferner eine aus der erfindungsgemäßen Mehrkomponenten-Zusammensetzung hergestellte Mörtelmasse, einen daraus hergestellten chemischen Dübel und eine den chemischen Dübel enthaltende Verankerungsstelle. Die Erfindung betrifft ferner ein Verfahren zur chemischen Befestigung von Konstruktionselementen in Bohrlöchern unter Verwendung der erfindungsgemäßen Mehrkomponenten-Zusammensetzung. Die Erfindung betrifft auch die Verwendung eines nicht stöchiometrischen Verhältnisses einer Epoxidharzkomponente (A) und der Härterkomponente (B) bezogen auf ihre EEW- und AHEW- Werte zur Erhöhung der Ausfestigkeit eines chemischen Dübels, insbesondere bei erhöhten Temperaturen, welcher aus der Epoxidharzkomponente (A) und der Härterkomponente (B) hergestellt wurde.

Mehrkomponenten-Zusammensetzungen auf der Grundlage von härtbaren Epoxidharzen und Aminen sind seit langem bekannt und werden als chemische Dübel zur Befestigung von Konstruktionselementen wie Ankerstangen, Bewehrungseisen und Schrauben in Bohrlöchern verschiedenen Untergründen, wie bespielweise Beton, verwendet. Zur Verbesserung der Eigenschaften bekannter Systeme wurden verschiedene Modifikationen, insbesondere an der Härterkomponente (B), in Betracht gezogen.

So beschreibt beispielsweise die EP 1 716 195 A einen Mehrkomponenten-Kit für Befestigungszwecke und dessen Verwendung. In der Härterkomponente (B) werden spezielle Mannichbasenformulierungen zur Verbesserung des Temperaturtoleranzbereichs verwendet. In der EP 2 931 782 A wird der Einsatz von styrolisierten Phenolen mit niedermolekularen Aminen in der Härterkomponente beschrieben, was zu einer Verbesserung der Leistungsfähigkeit eines daraus hergestellten chemischen Dübels führt. In der Patentschrift EP 2 826 796 A1 werden Härterkomponenten auf Basis von Aminen und Novolakharzen beschrieben.

Die im Stand der Technik beschriebenen Mehrkomponenten-Zusammensetzungen auf Epoxid-Amin-Basis zur Herstellung von Mörtelmassen und chemischen Dübeln zeigen in der Regel befriedigende Eigenschaften. Es ist jedoch ein erklärtes Ziel in der Entwicklung von chemischen Dübeln, deren Leistungsfähigkeit bei Standardbedingungen, aber auch bei erhöhten Temperaturen, insgesamt zu verbessern. Ziel ist dabei grundsätzlich, die Leistungsfähigkeit eines chemischen Dübels so zu erhöhen, dass der chemische Dübel nicht die Schwachstelle einer Verankerungsstelle darstellt. Besonders bei erhöhter Temperatur sind die im Stand der Technik bekannten Systeme auf Epoxid-Amin-Basis nicht in der Lage diesem Anspruch gerecht zu werden.

In Anbetracht der obigen Ausführungen ist es daher wünschenswert, Lösungen bereitzustellen, mit der die Auszugsfestigkeit (auch bezeichnet als Auszugslast oder einfach Lastwert) eines chemischen Dübels bei Standardbedingungen und bei erhöhten Temperaturen weiter verbessert werden kann.

Die Aufgabe der Erfindung ist daher, eine Mörtelmasse zur Herstellung eines chemischen Dübels bereitzustellen, wobei der aus der Mörtelmasse hergestellte chemische Dübel sich durch erhöhte Auszugslasten im Vergleich zu im Stand der Technik bekannten Mörtelmassen auszeichnet. Die erhöhten Auszugslasten sollen dabei sowohl unter Standardbedingungen (Raumtemperatur) als auch bei erhöhter Temperatur erzielt werden können.

Die der Erfindung zugrundeliegende Aufgabe wird durch eine Mehrkomponenten-Zusammensetzung gemäß Anspruch 1 gelöst. Bevorzugte Ausführungsformen der erfindungsgemäßen Mehrkomponenten-Zusammensetzung sind in den Unteransprüchen angegeben, die wahlweise miteinander kombiniert werden können.

Die Erfindung betrifft ferner auch eine Mörtelmasse enthaltend eine physikalische Mischung der Komponenten der Mehrkomponenten-Zusammensetzung gemäß Anspruch 10.

Die Erfindung betrifft ferner auch einen chemischen Dübel gemäß Anspruch 11 und eine Verankerungsstelle gemäß Anspruch 12 mit einem erfindungsgemäßen chemischen Dübel. Ferner betrifft die Erfindung auch ein Verfahren zur chemischen Befestigung von Konstruktionselementen in Bohrlöchern gemäß Anspruch 13.

Ein weiterer Gegenstand der Erfindung ist die Verwendung eines nicht stöchiometrischen Verhältnisses einer Epoxidharzkomponente (A) und einer Härterkomponente (B) bezogen auf ihre EEW- und AHEW- Werte zur Verbesserung der Auszugsfestigkeit eines chemischen Dübels, insbesondere bei erhöhten Temperaturen.

Im Sinne der Erfindung haben die hier und in der nachfolgenden Beschreibung verwendeten Begriffe die folgende Bedeutung:

"Mehrkomponenten-Zusammensetzung" ist ein System, das mehrere voneinander getrennt gelagerte Komponenten umfasst, so dass eine Härtung erst nach dem Mischen aller Komponenten erfolgt; erfindungsgemäß umfasst die Mehrkomponenten-Zusammensetzung mindestens eine Epoxidharzkomponente (A) sowie mindestens eine Härterkomponente (B); in einer bevorzugten Ausführungsform ist die Mehrkomponenten-Zusammensetzung eine Zweikomponenten-Zusammensetzung umfassend eine Epoxidharzkomponente (A) sowie eine Härterkomponente (B).

"Epoxidharzkomponente (A)" ist eine Komponente der Mehrkomponenten-Zusammensetzung umfassend mindestens ein härtbares Epoxidharz. Der EEW-Wert einer Epoxidharzkomponente (A) bezeichnet das Epoxidäquivalent und gibt die Menge einer Epoxidharzkomponente (A) in g an, die 1 Mol Epoxidgruppen enthält.

Härterkomponente (B) ist eine Komponente der Mehrkomponenten-Zusammensetzung umfassend mindestens ein gegenüber Epoxidgruppen reaktives Amin. Der AHEW-Wert (amine hydrogen equivalent weight, H-Äquivalent) einer Härterkomponente (B) gibt die Menge der Härterkomponente (B) an, in der 1 mol gegenüber Epoxidgruppen reaktive Aminowasserstoffatome enthalten sind.

"Mörtelmasse" bezeichnet die physikalische Mischung der Komponenten der Mehrkomponenten-Zusammensetzung, insbesondere die physikalische Mischung der Epoxidharzkomponente (A) und der Härterkomponente (B). Durch (vollständige) Reaktion der Komponenten (auch als Härtung bezeichnet) entsteht ein chemischer Dübel.

"Amine" sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)).

"ein", "eine", "einer" als Artikel vor einer chemischen Verbindungsklasse, z.B. vor dem Wort "Füllstoff", dass eine oder mehrere unter diese chemische Verbindungsklasse fallende Verbindungen, z.B. verschiedene "Füllstoffe", gemeint sein können;

"mindestens ein", "mindestens eine", "mindestens einer" zahlenmäßig "ein oder mehrere"; in einer bevorzugten Ausführungsform ist mit diesem Begriff zahlenmäßig "ein", "eine", "einer" gemeint;

"enthalten", "umfassen" und "beinhalten", dass neben den genannten Bestandteilen noch weitere vorhanden sein können; diese Begriffe sind einschließlich gemeint und umfassen daher auch "bestehen aus"; "bestehen aus" ist abschließend gemeint und bedeutet, dass keine weiteren Bestandteile vorhanden sein können; in einer bevorzugten Ausführungsform bedeuten die Begriffe "enthalten", "umfassen" und "beinhalten" den Begriff "bestehen aus".

Alle in diesem Text genannten Normen (z.B. DIN-Normen) wurden in der zum Anmeldetag dieser Anmeldung aktuellen Ausgabe verwendet.

Es wurde nunmehr überraschend gefunden, dass der Einsatz einer nicht stöchiometrischen Menge der Epoxidharzkomponente (A) und der Härterkomponente (B) bezogen auf ihre EEW bzw. AHEW-Werte bei der Herstellung einer Mörtelmasse zu einer Erhöhung der Lastwerte eines chemischen Dübels führt, welcher aus der Mörtelmasse hergestellt wurde. Durch einen nicht stöchiometrischen Ansatz in Bezug auf die EEW bzw. AHEW-Werte können die zu erreichenden Lastwerte eines chemischen Dübels sowohl unter Standardbedingungen (Raumtemperatur) als auch bei erhöhten Temperaturen verbessert werden.

Die erfindungsgemäße Mehrkomponenten-Zusammensetzung umfasst mindestens eine Epoxidharzkomponente (A) und eine Härterkomponente (B), wobei die Mehrkomponenten-Zusammensetzung bevorzugt als Zweikomponenten-Zusammensetzung mit einer Epoxidharzkomponente (A) und eine Härterkomponente (B) konfektioniert ist. Die Epoxidharzkomponente (A) umfasst mindestens ein härtbares Epoxidharz. Die Härterkomponente (B) umfasst mindestens ein gegenüber Epoxidgruppen reaktives Amin. In der Mehrkomponenten-Epoxidharzmasse bzw. in der bevorzugten Zweikomponenten-Zusammensetzung liegen die Epoxidharzkomponente (A) und die Härterkomponente (B) reaktionsinhibierend getrennt voneinander vor.

Um eine vollständige Reaktion zwischen den Epoxidgruppen der Epoxidharzkomponente und den Aminen der Härterkomponente (B) zu erreichen, muss die Stöchiometrie der Komponenten (A) und (B), bezogen auf ihre EEW- und AHEW-Werte ausgeglichen sein, d.h. 1:1 sein. Für den Fall, dass entweder Epoxidgruppen in der Epoxidharzkomponente (A) oder Aminowasserstoffe in Härterkomponente (B) im Überschuss vorhanden sind, ist das Verhältnis des EEW-Werts der Epoxidharzkomponente (A) und des AHEW-Wertes der Härterkomponente (B) nicht stöchiometrisch, d.h. entweder <1:1 oder >1:1.

Es ist erfindungswesentlich, dass das Verhältnis der Epoxidharzkomponente (A) und der Härterkomponente (B) bezogen auf ihre EEW- bzw. AHEW-Werte in der Mehrkomponenten-Zusammensetzung bzw. in der daraus hergestellten Mörtelmasse nicht stöchiometrisch ist.

Es ist bevorzugt, dass die Stöchiometrie der Epoxidharzkomponente (A) und der Härterkomponente (B) bezogen auf ihre EEW- und AHEW-Werte >1:1 ist. Bevorzugt ist die Stöchiometrie der Epoxidharzkomponente (A) und der Härterkomponente (B) ≥1,01:1 bis 2:1, noch bevorzugter ≥1,01:1 bis 1,5:1, noch bevorzugter im Bereich von 1,01:1 bis 1,2:1, noch bevorzugter im Bereich 1,01:1 bis 1,14 und am meisten bevorzugt im Bereich von 1,03:1 bis 1,07:1.

Der AHEW-Wert (amine hydrogen equivalent weight, H-Äquivalent) einer Härterkomponente (B) gibt die Menge der Härterkomponente (B) an, in der 1 mol gegenüber Epoxidgruppen reaktive Aminowasserstoffatome enthalten sind. Der AHEW-Wert kann sowohl rechnerisch als auch experimentell bestimmt werden.

Für ein einfaches Amin sei die Berechnung des AHEW-Wertes am Beispiel von meta-Xylylendiamin rein exemplarisch erläutert:

Allgemeine Formel: $$\text{H-Äq.} = \frac{Mw}{Funktionalität}$$

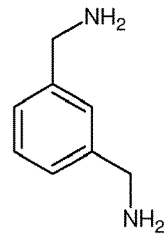

$$\text{eingesetzt: H-Äq.} = \frac{136}{4}\left[\frac{g}{eq}\right] = 34\left[\frac{g}{eq}\right]$$

Experimentell kann der AHEW-Wert durch Bestimmung der Glasübergangstemperatur (Tg) mittels DSC (differential scanning calorimetry) einer Mischung aus Epoxidharz (mit bekanntem EEW) und dem betreffenden Amin/einer Aminmischung erhalten werden. Es werden dabei die Glasübergangstemperaturen von Epoxidharz/Amin-Mischungen mit unterschiedlichen Verhältnissen bestimmt. Die Proben werden mit einer Heizrate von - 20 K/min von 21°C auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("$Tg_2$") besitzt das optimale Verhältnis von Epoxidharz und Amin. Aus dem bekannten EEW und dem optimalen Epoxidharz/Amin-Verhältnis lässt sich der AHEW-Wert berechnen.

Beispiel: EEW = 158 g/mol

Mischung Amin/Epoxidharz mit maximaler $Tg_2$: 1 g Amin mit 4,65 g Epoxidharz

AHEW (Amin) = 1*158/4,65 = 33,9785

Der EEW-Wert einer Epoxidharzkomponente (A) bezeichnet das Epoxidäquivalent und gibt die Menge einer Epoxidharzkomponente (A) in g an, die 1 Mol Epoxidgruppen enthält. Tatsächliche EEWs werden in g/eq angegeben. Die EEW-Werte werden in der Regel von den Herstellern der jeweils verwendeten Epoxidharze angegeben, basierend auf der jeweiligen chemischen Struktur berechnet oder analog zum oben beschriebenen Vorgehen für Amine experimentell durch DSC bestimmt. Es ist auch möglich, dass die Epoxidharzkomponente (A) ein oder mehrere Epoxide enthält. Die Epoxidgruppen eines oder mehrerer Epoxide addieren sich dann zum Epoxidäquivalent der Epoxidharzkomponente (A).

Die Härterkomponente (B) umfasst mindestens ein gegenüber Epoxidgruppen reaktives Amin. Entsprechende Amine sind dem Fachmann bekannt. Vorzugsweise ist das mindestens eine gegenüber Epoxidgruppen reaktive Amin ausgewählt aus der Gruppe bestehend aus aliphatischen, alicyclischen, aromatischen und araliphatischen Aminen, und welches pro Molekül im Mittel mindestens zwei an ein Stickstoffatom gebundene reaktive Wasserstoffatome aufweist.

Beispiele für gegenüber Epoxidgruppen reaktive geeignete Amine sind im Folgenden angegeben, ohne jedoch den Umfang der Erfindung einzuschränken: 1,2-Diaminoethan(ethylendiamin), 1,2-Propandiamin, 1,3-Propandiamin, 1,4-Diaminobutan, 2,2-Dimethyl-1 ,3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1,8-diaminooctan, 2-Butyl-2-ethyl-1,5-diaminopentan, N,N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, MXDA), 1,4-Benzoldimethanamin (p-Xylylendiamin, PXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPDA)), Diaminodicyclohexylmethan (PACM), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.0$^{2,6}$]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin.

Bevorzugte Amine sind Polyamine, wie 2-Methylpentandiamin (DYTEK A), 3-Aminomethyl-3,5,5-trimethylcyclohexan (IPDA), 1,3-Benzoldimethanamin (m-Xylylendiamin, MXDA), 1,4- Benzoldimethanamin (p-Xylylendiamin, PXDA), 1,6-Diamino-2,2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), (3(4),8(9)Bis(aminomethyl)dicyclo[5.2.1.0$^{2,6}$]decan (Isomerengemisch, tricyclischer primärer Amine; TCD-Diamin), 1,14-Diamino-4,11-dioxatetradecan, Dipropylentriamin, 2-Methyl-1,5-pentandiamin, N,N'-Dicyclohexyl-1,6-hexandiamin, N,N'-Dimethyl-1,3- diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis(amino- methyl)tricyclopentadien, 1,8-Diamino-p-menthan, Bis-(4-amino-3,5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin und Methylcyclohexyl-diamin (MCDA).

Die Amine können sowohl einzeln als auch im Gemisch von zwei oder mehreren der genannten Amine eingesetzt werden.

In einer vorteilhaften Ausführungsform weist die Härterkomponente (B) einen AHEW-Wert von 20 bis 1000 g/EQ auf, bevorzugt von 30 bis 500 g/EQ, bevorzugter von 40 bis 350 g/EQ, noch bevorzugter von 50 bis 225 g/EQ und besonders bevorzugt von 50 bis 150 g/EQ.

Das bzw. die gegenüber Epoxidgruppen reaktive(n) Amin(e) ist/sind in der Härterkomponente (B) bevorzugt in einem Anteil von 10 bis 90 Gew.-%, besonders bevorzugt 35 bis 70 Gew.-% bezogen auf das Gesamtgewicht der Härterzusammensetzung (B) enthalten.

Es ist auch möglich, dass das mindestens eine gegenüber Epoxidgruppen reaktive Amin mindestens eine Mannich-Base umfasst. Diese kann allein oder in Kombination mit den vorgenannten Aminen eingesetzt werden. Die verwendeten Mannichbasen sind die Reaktionsprodukte eines Amins und eines Aldehyds mit einer phenolischen Verbindung, die aus der aus Phenol, Brenzkatechin, Resorcin, Hydrochinon, Hydroxyhydrochinon, Phloroglucin, Pyrogallol, o-Kresol, m-Kresol, p-Kresol, Bisphenolen wie Bisphenol F oder Bisphenol A, und Kombinationen davon bestehenden Gruppe ausgewählt ist.

Zur Bildung der Mannich-Base wird die phenolische Verbindung mit einem vorzugsweise primären oder sekundären Amin und einem Aldehyd oder einer Aldehydvorstufe umgesetzt, die durch Zersetzung einen Aldehyd ergibt. Der Aldehyd oder die Aldehydvorstufe kann vorteilhaft als wässrige Lösung, insbesondere bei erhöhter Temperatur von etwa 50°C bis 90°C, zu der Reaktionsmischung zugesetzt und mit dem Amin sowie der phenolischen Verbindung umgesetzt werden.

Als phenolische Verbindung werden bevorzugt Phenol oder ein styrolisiertes Phenol, Resorcin, styrolisiertes Resorcin, Bisphenol A oder Bisphenol F, besonders bevorzugt Phenol oder ein styrolisiertes Phenol, styrolisiertes Resorcin oder Bisphenol A zur Bildung der Mannich-Base verwendet.

Der zur Bildung der Mannich-Base verwendete Aldehyd ist bevorzugt ein aliphatischer Aldehyd, besonders bevorzugt Formaldehyd. Als Aldehyd-Vorstufe können bevorzugt Trioxan oder Paraformaldehyd verwendet werden, die durch Erhitzen in Gegenwart von Wasser zu Formaldehyd zerfallen.

Das zur Umsetzung mit dem Aldehyd und der phenolischen Verbindung unter Bildung der Mannich-Base verwendete Amin ist bevorzugt eines der oben genannten Amine und bevorzugt 1,3-Benzoldimethanamin (MXDA), 3-Aminomethyl-3,5,5-trimethylcyclohexan (IPDA), 1,3-Bis(aminomethyl)cyclohexan (1,3-BAC), 1,2- und 1,4-Diaminocyclohexan (1,2-DACH und 1,4-DACH), Diaminodicyclohexylmethan (PACM), Methylcyclohexyl-diamin (MCDA) und 5-(Aminomethyl)bicyclo[[2.2.1]hept-2-yl]methylamin (NBDA). Vorzugsweise liegt das Amin in einem Überschuss vor, so dass die Mannich-Base freie Aminogruppen aufweist. Das zur Umsetzung mit dem Aldehyd und der phenolischen Verbindung unter Bildung der Mannich-Base verwendete Amin kann auch ein Aminosilan sein, dass ausgewählt ist aus der Gruppe bestehend aus 3-Aminoalkyltrialkoxysilanen, wie 3-Aminopropyl- tri(m)ethoxysilan, 3-Aminoalkylalkyldialkoxysilan, wie 3-Aminopropylmethyldi(m)ethoxysilan, N-(Aminoalkyl)-3-aminoalkyltrialkoxysilanen, wie N-(2-Aminoethyl)-3-aminopropyltri(m)ethoxysilan, N-(Aminoalkyl)-3-aminoalkyl- alkyldialkoxysilanen, wie N-(2-Aminoethyl)-3-aminopropylmethyldi(m)ethoxysilan, 3-[2-(2-Aminoethylamino)ethylamino]propyltri(m)ethoxysilan, Bis-(gamma-Trimethoxysilylpropyl)amin, oder Mischungen davon; oder ferner ausgewählt aus der Gruppe bestehend aus N-Cyclohexyl-3-aminopropyltri(m)ethoxysilan, N-Cyclohexylaminomethylmethyldiethoxysilan, N-Cyclohexylaminomethyltriethoxysilan, 3-Ureidopropyltri(m)ethoxysilan, N-Methyl[3-(T rimethoxysilyl)-propylcarbamat, N-T rimethoxysilylmethyl-O-methylcarbamat und N-Dimethoxy(methyl)silylmethyl-O-methylcarbamat.

In einer bevorzugten Ausführungsform ist die Mannich-Base in einem Anteil von 10 Gew.-% bis 70 Gew.-% in der Härterkomponente (B) vorhanden, bevorzugt von 15 Gew.-% bis 60 Gew.-%, weiter bevorzugt von 20 Gew.-% bis 50 Gew.-% und besonders bevorzugt von 25 Gew.-% bis 40 Gew.-%, bezogen auf das Gesamtgewicht der Härterkomponente (B).

In einer vorteilhaften Ausführungsform kann die Härterkomponente (B) wenigstens einen weiteren Zusatz ausgewählt aus der Gruppe von Beschleunigern, Haftvermittlern, Verdickern und Füllstoffen. Nicht reaktive Verdünnungsmittel (Lösungsmittel) können vorzugsweise in einer Menge bis zu 30 Gew.-% enthalten sein, bezogen auf das Gesamtgewicht der Härterkomponente (B), beispielsweise von 1 bis 20 Gew.-%. Beispiele für geeignete Lösungsmittel sind Alkohole, wie Methanol, Ethanol oder Glycole, Niederalkylketone wie Aceton, Diniederalkylniederalkanoylamide wie Dimethylacetamid, Niederalkylbenzole wie Xylole oder Toluol, Phthalsäureester oder Paraffine. Vorzugsweise liegt die Menge an Lösungsmitteln bei < 5 Gew.-% bezogen auf das Gesamtgewicht der Härterkomponente.

Vorzugsweise umfasst die Härterkomponente (B) ein Salz (S) als Beschleuniger ausgewählt aus der Gruppe bestehend aus Salzen der Salpetersäure, Salzen der Halogene, Salzen der Trifluormethansulfonsäure sowie Kombinationen davon. Als Salz (S) eignen sich insbesondere die folgenden Verbindungen: $Ca(NO_3)_2$ (Calciumnitrat, üblicherweise eingesetzt als $Ca(NO_3)_2$ Tetrahydrat), eine Mischung aus $Ca(NO_3)_2/HNO_3$, $KNO_3$ (Kaliumnitrat), $NaNO_3$(Natriumnitrat), $Mg(NO_3)_2$ (Magnesiumnitrat, üblicherweise eingesetzt als $Mg(NO_3)_2$ Hexahydrat), $Al(NO_3)_3$ (Aluminiumnitrat, üblicherweise eingesetzt als $Al(NO_3)_3$ Nonahydrat), $NH_4NO_3$ (Ammoniumnitrat), $Ca(NO_2)_2$(Calciumnitrit), NaCl (Natriumchlorid), NaBr (Natriumbromid), NaI (Natriumiodid), $Ca(CF_3SO_3)_2$ (Calciumtriflat), $Mg(CF_3SO_3)_2$ (Magnesiumtriflat), $Li(CF_3SO_3)_2$ (Lithiumtriflat). Die Salze können sowohl einzeln als auch im Gemisch von zwei oder mehreren der genannten Salze eingesetzt werden. Das Salz (S) ist vorzugsweise in einem Anteil von 0,1 bis 15 Gew.-%, vorzugsweise in einem Anteil 1,0 bis 10,0 Gew.-% bezogen auf das Gesamtgewicht der Härterkomponente (B) in der Härterkomponente (B) enthalten. Zur Verbesserung der Löslichkeitseigenschaften des Salzes (S) in der Härterkomponente (B) kann es vorgesehen sein, dass das Salz (S) in einem geeigneten Lösemittel gelöst wird und entsprechend als Lösung eingesetzt wird. Hierfür eignen sich beispielsweise organische Lösemittel wie Methanol, Ethanol und Glycerin.

Als Co-Beschleuniger können beispielsweise Benzylalkohol, tertiäre Amine, Novolakharze, Imidazole oder Aminophenole, sytrolisierte Phenole, Organophosphine, Lewis-Basen oder -Säuren wie Phosphorsäureester, oder Gemische von zwei oder mehr davon verwendet werden. Bevorzugt sind die Co-Beschleuniger in der Härterkomponente (B) in einem Gewichtsanteil von 0,001 bis 5 Gew.-% enthalten, bezogen auf das Gesamtgewicht der Härterkomponente (B). Die Co-Beschleuniger können alleine oder in Kombination mit anderen Beschleunigern verwendet werden. Bekannte Kombinationen sind beispielsweise Novolakharz mit anorganischem Salz (S), Novolakharz mit styrolisiertem Phenol, Bisphenol F mit p-Toluolsulfonsäure oder styrolisiertes Phenol mit Salicylsäure. Hinsichtlich der Novolakharz-basierten Beschleuniger wird auch Bezug genommen auf die EP 3 392 287 A1.

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mindestens eine Si-gebundene hydrolisierbare Gruppe aufweisen, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt. Weitere Silane sind beispielsweise in der EP3000792 A1 beschrieben, deren Inhalt hiermit in die vorliegende Anmeldung mit aufgenommen wird. Der Haftvermittler kann in einer Menge bis zu 10 Gew.-%, bevorzugt 0,1 bis 5 Gew.-%, weiter bevorzugt 1 ,0 bis 2,5 Gew.-% bezogen auf das Gesamtgewicht der Härterkomponente (B) enthalten sein.

Als Füllstoffe dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Des Weiteren können auch Verdicker wie pyrogene Kieselsäure als anorganischer Füllstoff verwendet werden. Weitere Details zu verwendbaren Füllstoffen sind beispielsweise in der WO2020/058015 A1 ausgeführt. Die anorganischen Füllstoffe können in Form von Sanden, Mehlen oder Formkörpern, vorzugsweise in Form von Fasern oder Kugeln, zugesetzt werden. Die Füllstoffe können in einer oder in allen Komponenten der Mehrkomponenten-Zusammensetzung vorhanden sein.

Der Anteil an Füllstoffen in der Härterkomponente (B) beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Härterkomponente (B).

Die Epoxidharzkomponente (A) umfasst vorzugsweise wenigstens ein härtbares Epoxidharz. Als härtbares Epoxid in der Epoxidharzkomponente (A) kommt eine Vielzahl der hierfür dem Fachmann bekannten und kommerziell erhältlichen Verbindungen in Betracht, die im Mittel mehr als eine Epoxid-Gruppe, vorzugsweise zwei EpoxidGruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und

tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können einen EEW-Wert von 120 bis 2000 g/EQ aufweisen, vorzugsweise von 140 bis 400 g/EQ, insbesondere 155 bis 195 g/EQ, beispielsweise 165 bis 185 g/EQ aufweisen. Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan. Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem EEW von 180 bis 190 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von Mn < 2000 g/mol.

Der Anteil an Epoxidharz beträgt >0 bis 100 Gew.-%, bevorzugt 10 bis 70 Gew.-% und besonders bevorzugt 30 bis 60 Gew.-%, bezogen auf das Gesamtgewicht der Epoxidharzkomponente (A).

Neben den Epoxidharzen kann die Epoxidharzkomponente (A) wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether, T rimethylolpropantriglycidylether (TMPTGE) oder Trimethylolethantriglycidylether (TMETGE), wobei Trimethylolethantriglycidylether bevorzugt ist. Es können auch Mischungen von zwei oder mehr dieser Reaktivverdünner verwendet werden, vorzugsweise Triglycidylether enthaltende Mischungen, besonders bevorzugt als Gemisch aus 1 ,4-Butandioldiglycidylether (BDDGE) und Trimethylolpropantriglycidylether (TMPTGE) oder 1 ,4-Butandioldiglycidylether (BDDGE) und Trimethylolethantriglycidylether (TMETGE).

Die Reaktivverdünner liegen bevorzugt in einer Menge von 0 bis 60 Gew.-% vor, insbesondere von 1 bis 20 Gew.-%, bezogen auf das Gesamtgewicht der Epoxidharzkomponente (A).

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Des Weiteren kann die Epoxidharzkomponente (A) übliche Zusätze enthalten, insbesondere Haftvermittler und Füllstoffe, wie bereits für die Härterkomponente (B) beschrieben.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Epoxidharzkomponente (A).

Weitere denkbare Zusätze zur Mehrkomponenten-Epoxidharzmasse sind ferner Thixotropiermittel wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Die Mehrkomponenten-Epoxidharzmasse liegt vorzugsweise in Patronen, Kartuschen oder Folienbeuteln vor, die zwei oder mehrere voneinander getrennte Kammern umfassen, in welchen die Epoxidharzkomponente (A) und die Härterkomponente (B) der Mörtelmasse reaktionsinhibierend voneinander getrennt angeordnet sind.

Bei der bestimmungsgemäßen Anwendung werden die Epoxidharzkomponente (A) und die Härterkomponente (B) aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente (B) reagieren mit den Epoxidharzen der Epoxidharzkomponente (A) unter Polyaddition, sodass die Mörtelmasse unter Umgebungsbedingungen innerhalb einer gewünschten Zeit, vorzugsweise innerhalb weniger Minuten oder Stunden, aushärtet.

Die erfindungsgemäße Mehrkomponenten-Zusammensetzung bzw. die durch die physikalische Mischung der

Komponenten der Mehrkomponenten-Zusammensetzung hergestellte Mörtelmasse wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dienen die erfindungsgemäßen Mörtelmassen und die erfindungsgemäßen Mehrkomponenten-Zusammensetzungen zur chemischen Befestigung von Verankerungsmitteln.

Ein weiterer Gegenstand der vorliegenden Erfindung ist ein Verfahren zur chemischen Befestigung von Konstruktionselementen in Bohrlöchern, wobei zur chemischen Befestigung der Konstruktionselemente eine erfindungsgemäße Mehrkomponenten-Zusammensetzung oder eine erfindungsgemäßes Mörtelmasse, wie zuvor beschrieben verwendet wird. Das erfindungsgemäße Verfahren eignet sich insbesondere zum Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dient das erfindungsgemäße Verfahren zur chemischen Befestigung von Verankerungsmitteln.

Ein weiterer Gegenstand der vorliegenden Erfindung ist auch die Verwendung eines nicht stöchiometrischen Verhältnisses einer Epoxidharzkomponente (A) und einer Härterkomponente (B) bezogen auf ihre EEW- und AHEW-Werte zur Verbesserung der Auszugsfestigkeit eines chemischen Dübels, insbesondere zur Verbesserung der Auszugsfestigkeit bei erhöhten Temperaturen.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

## AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

**Tabelle 1:** Liste der in den Beispielen und Referenzen verwendeten Bestandteile (Erklärung der Abkürzungen) sowie ihrer Handelsnamen und Bezugsquellen

| Funktion | Handelsname | Chemische Spezifikation | Hersteller |
|---|---|---|---|
| Epoxidharz | Araldite® GY 240 | Bisphenol-A basiertes Epoxidharz (DGEBA) | Huntsman Advanced Materials, Deutschland |
| Epoxidharz | Araldite® GY 282 | Bisphenol-F basiertes Epoxidharz (DGEBF) | Huntsman Advanced Materials, Deutschland |
| Reaktivverdünner | Araldite® DY-026 | 1,4-Butandiol-diglycidylether (BDDGE) | Huntsman Advanced Materials, Deutschland |
| Reaktivverdünner | Araldite® DY-T | Trimethyolpropantriglycidylether (TMPTGE) | Huntsman Advanced Materials, Deutschland |
| Haftvermittler | Glymo | (3-glycidyloxypropyl) trimethoxysilane | Evonik Industries, Deutschland |

(fortgesetzt)

| Funktion | Handelsname | Chemische Spezifikation | Hersteller |
|---|---|---|---|
| Haftvermittler | Dynasylan® AMEO | 3-Aminopropyl-triethoxysilan | Evonik Degussa, Deutschland |
| Füllstoff | Millisil® W1 2 | Quarzmehl, mittlere Partikelgröße $d_{50}$ = 16 $\mu$m | Quarzwerke, Deutschland |
| Füllstoff | Dyckerhoff weiß CEM I 42, R | Zement | Dyckerhoff, Deutschland |
| Verdicker | CabOSil® TS 720 | Kieselsäure | Cabot corporation, Deutschland |
| Verdicker | Aerosil® R805 | Kieselsäure | Evonik, Detuschland |
| Amin | mXDA | m-Xylylenediamine | Itochu, Deutschland |
| Amin | Vestamine® IPD | Isophorondiamine (IPDA) | Evonik Degussa, Deutschland |
| Amin | 1,3-BAC | 1,3-Bis(aminomethyl)cyclohexan | Itochu, Deutschland |
| Amin | Baxxodur® EC 210 | Diaminomethylcyclohexan (MCDA) | BASF, Deutschland |
| Amin | mXDA-Resorcin-basierte Mannich-Base in mXDA | mXDA-Resorcin-basierte Mannich-Base in mXDA | - |
| Beschleuniger | Novares® LS 500 | styrolisiertes Phenol | Rütgers Novares, Deutschland |
| Beschleuniger | Ancamine® K54 | Tris-2,4,6-dimethylaminomethyl phenol | Evonik, Deutschland |
| Beschleuniger | Calciumnitrat | $Ca(NO_3)_2\ 4H_2O$ | Sigma Aldrich, Deutschland |
| Lösungsmittel | Glycerin | 1,2,3-Propantriol | Merck, Deutschland |

Zur Herstellung der Epoxidharzkomponenten (A) gemäß der Tabellen 2 bis 5 wurden die flüssigen Komponenten mit Hilfe eines Holzspachtels per Hand vorgemischt. Anschließend wurden die Füllstoffe und Verdicker hinzugegeben und zunächst per Hand vorgemischt. Die Mischung wurde anschließend in einem Dissolver (PC Laborsystem, Volumen 1L) für 8,5 Minuten unter 80 mbar Unterdruck bei 3500 U/min gerührt.

Zur Herstellung der Härterkomponenten (B) gemäß Tabelle 2 bis 5 wurden die Amine vorgemischt und der Beschleuniger bzw. das Beschleunigergemisch in der Aminmischung gelöst. Anschließend wurden Füllstoff und Verdicker zugegeben und per Hand vorgemischt. Die Mischung wurde anschließend in einem Dissolver (PC Laborsystem, Volumen 1L) für 8,5 Minuten unter 80 mbar Unterdruck bei 3500 U/min gerührt.

Der Beschleuniger $Ca(NO_3)_2$ wurde als Lösung in Glycerin (1,2,3-Propantriol) eingesetzt. Zur Herstellung der Calciumnitrat- Lösung wurden 400,0 g Calciumnitrat-Tetrahydrat zu 100,0 g Glycerin gegeben und bei 50 °C bis zur vollständigen Lösung (3 Stunden) gerührt. Die so hergestellte Lösung enthielt 80,0 % Calciumnitrat-Tetrahydrat.

Die Herstellung der mXDA-Resorcin basierten Mannichbase in mXDA erfolgt nach dem Fachmann bekannten Verfahren, welche in der EP0645408 A1 beschrieben sind.

Zur Herstellung von Mörtelmassen wurden die Epoxidharzkomponente (A) und die Härterkomponente (B) in einem Speedmixer in einem Verhältnis in dem in den Tabellen 2 bis 5 angegebenen Verhältnis in Bezug auf die EEW- und AHEW-Werte gemischt. In den Versuchsserien 1 bis 4 werden EEW/AHEW Verhältnisse von 1:1 (Vergleichsbeispiel) und 1,05:1 und 1,1:1,15 abgebildet.

**Tabelle 2:** Zusammensetzung der Härterkomponente (B) und der Epoxidharzkomponente (A) der **Serie 1** umfassend die erfindungsgemäßen Beispiele 1.1, 1.2 und 1.3 und Vergleichsbeispiel 1 [in Gew.-%].

| **Härterkomponente (B)** | | **Epoxidharzkomponente (A)** | Beispiel 1.1 | Beispiel 1.2 | Beispiel 1.3 | Vergleichsbeispiel 1 |
|---|---|---|---|---|---|---|
| Isophorondiamin | 19,8 | Dynasylan® GLYMO | 5,0 | 5,0 | 5,0 | 5,0 |
| 1,3-BAC | 19,8 | Araldite® GY 240 | 25,7 | 28,3 | 30,9 | 23,4 |
| Calciumnitrat-Tetrahydrat (80% in Glycerin) | 2,5 | Araldite® GY 282 | 13,9 | 15,2 | 16,7 | 12,6 |
| Ancamine K54 | 2,4 | Araldite® DY-026 | 5,0 | 5,4 | 6,0 | 4,5 |
| Millisil W1 2 | 51,2 | Araldite® DY-T | 5,0 | 5,4 | 6,0 | 4,5 |
| Aerosil R805 | 4,3 | Dyckerhoff weiß CEM I 42,5R | 44,1 | 39,4 | 34,1 | 48,7 |
| | | Cab-O-Sil® TS-720 | 1,3 | 1,3 | 1,3 | 1,3 |
| | | | | | | |
| AHEW [g/EQ] | 98 | EEW [g/EQ] | 299 | 273 | 251 | 327 |
| | | Einwaage (A) auf 100 g (B) [g] | 320 | 306 | 295 | 334 |
| | | **Verhältnis EEW/AHEW** | **1,05:1** | **1,1:1** | **1,15:1** | **1:1** |

**Tabelle 3:** Zusammensetzung der Härterkomponente (B) und der Epoxidharzkomponente (A) der **Serie 2** umfassend die erfindungsgemäßen Beispiele 2.1 und 2.2 und Vergleichsbeispiele 2 [in Gew.-%].

| **Härterkomponente (B)** | | **Epoxidharzkomponente (A)** | Beispiel 2.1 | Beispiel 2.2 | Vergleichsbeispiel 2 |
|---|---|---|---|---|---|
| mXDA | 5,6 | Dynasylan® GLYMO | 5,0 | 5,0 | 5,0 |
| 1,3-BAC | 25,0 | Araldite® GY 240 | 33,8 | 37,4 | 30,7 |
| Baxxodur EC 210 | 9,0 | Araldite® GY 282 | 18,2 | 20,2 | 16,5 |
| Calciumnitrat-Tetrahydrat (80% in Glycerin) | 2,5 | Araldite® DY-026 | 6,5 | 7,2 | 5,9 |
| Ancamine K54 | 2,4 | Araldite® DY-T | 6,5 | 7,2 | 5,9 |
| Millisil W1 2 | 51,2 | Dyckerhoff weiß CEM I 42,5R | 28,5 | 21,2 | 34,7 |
| Aerosil R805 | 4,3 | Cab-O-Sil® TS-720 | 1,5 | 1,8 | 1,3 |
| | | | | | |
| AHEW [g/EQ] | 87 | EEW [g/EQ] | 231 | 210 | 253 |
| | | Einwaage (A) auf 100 g (B) [g] | 279 | 266 | 291 |
| | | **Verhältnis EEW/AHEW** | **1,05:1** | **1,1:1** | **1:1** |

**Tabelle 4:** Zusammensetzung der Härterkomponente (B) und der Epoxidharzkomponente (A) der **Serie 3** umfassend die erfindungsgemäßen Beispiele 3.1 und 3.2 und Vergleichsbeispiel 3 [in Gew.-%].

| **Härterkomponente (B)** | | **Epoxidharzkomponente (A)** | Beispiel 3.1 | Beispiel 3.2 | Vergleichsbeispiel 3 |
|---|---|---|---|---|---|
| mXDA-Resorcin-basierte Mannich-Base in mXDA | 55,0 | Dynasylan® GLYMO | 5,0 | 5,0 | 5,0 |
| Dynasylan AMEO | 2,0 | Araldite® GY 240 | 36,0 | 39,5 | 32 |
| Ancamine K54 | 3,0 | Araldite® GY 282 | 19,4 | 21,3 | 17,2 |
| Millisil W1 2 | 37,7 | Araldite® DY-026 | 6,9 | 7,6 | 6,2 |
| Cab-O-Sil TS 720 | 2,3 | Araldite® DY-T | 6,9 | 7,6 | 6,2 |
| | | Dyckerhoff weiß CEM I 42,5R | 23,2 | 16,0 | 30,8 |
| | | Cab-O-Sil® TS-720 | 2,6 | 3,0 | 2,6 |
| | | | | | |
| AHEW [g/EQ] | 86 | EEW [g/EQ] | 218 | 199 | 243 |
| | | Einwaage (A) auf 100 g (B) [g] | 266 | 255 | 283 |
| | | **Verhältnis EEW/AHEW** | **1,05:1** | **1,1:1** | **1:1** |

**Tabelle 5:** Zusammensetzung der Härterkomponente (B) und der Epoxidharzkomponente (A) der **Serie 4** umfassend die erfindungsgemäßen Beispiele 4.1 und 4.2 und Vergleichsbeispiel 4 [in Gew.-%].

| **Härterkomponente (B)** | | **Epoxidharzkomponente (A)** | Beispiel 4.1 | Beispiel 4.2 | Vergleichsbeispiel 4 |
|---|---|---|---|---|---|
| mXDA | 40,4 | Dynasylan® GLYMO | 5,0 | 5,0 | 5,0 |
| Novares LS 500 | 10,0 | Araldite® GY 240 | 34,1 | 37,8 | 30,8 |
| Ancamine K54 | 43,4 | Araldite® GY 282 | 18,3 | 20,3 | 16,6 |
| Millisil W1 2 | 3,8 | Araldite® DY-026 | 6,6 | 7,3 | 5,9 |
| Cab-O-Sil TS 720 | 2,4 | Araldite® DY-T | 6,6 | 7,3 | 5,9 |
| | | Dyckerhoff weiß CEM I 42,5R | 26,7 | 19,4 | 33,1 |
| | | Cab-O-Sil® TS-720 | 2,7 | 2,9 | 2,7 |
| | | | | | |
| AHEW [g/EQ] | 86 | EEW [g/EQ] | 229 | 208 | 253 |
| | | Einwaage (A) auf 100 g (B) [g ] | 286 | 272 | 301 |
| | | **Verhältnis EEW/AHEW** | **1,05:1** | **1,1:1** | **1:1** |

Die Mörtelmassen wurden möglichst blasenfrei in eine 1 K-Kartusche gefüllt und sofort in das für die Auszugsversuche präparierte Bohrloch injiziert. Die Auszugsfestigkeit der durch Mischen der Epoxidharzkomponente (A) und Härterkomponente (B) gemäß den angegebenen Beispielen erhaltenen Mörtelmassen wurden unter Verwendung einer hochfesten Ankergewindestange M12 gemäß EAD 330499-01-0601 (Dezember 2018) bestimmt, die in ein hammergebohrtes Bohrloch mit einem Durchmesser von 14 mm und einer Bohrlochtiefe von 69 mm mit der jeweiligen Mörtelmasse in C20/25 Beton eingedübelt wurde. Die Bohrlöcher wurden mit Druckluft (2 × 6 bar), einer Drahtbürste (2 x) und anschließend wieder Druckluft (2 × 6 bar) gereinigt.

Die Bohrlöcher wurden vom Bohrgrund her mit der jeweils zu prüfenden Mörtelmasse zu zwei Dritteln befüllt. Die Gewindestange wurde von Hand eingedrückt. Der Mörtelüberschuss wurde mittels eines Spachtels entfernt. Die Aushärtezeit betrug 24 Stunden. Für die Prüfung der Referenzlast R1 fand der Auszug direkt nach der Aushärtezeit statt. Im Fall der Prüfung bei erhöhter Temperatur (B3) wurde der Prüfkörper für 48 Stunden bei 80°C gelagert. Die darauffolgenden Auszüge fanden ebenfalls bei dieser Temperatur des Prüfkörpers statt. Die Versagenslast wurde durch zentrisches Ausziehen der Ankergewindestange mit enger Abstützung ermittelt. Die mit den gehärteten Mörtelmassen gemäß den Beispielen 1.1 bis 4.2 und den Vergleichsbeispielen 1 bis 4 erhaltenen Lastwerte sind der folgenden Tabelle 6 zu entnehmen.

**Tabelle 6:** Versagenslasten der gehärteten Mörtelmassen gemäß den Beispielen 1.1 bis 4.2 und den Vergleichsbeispielen unter R1-Bedinungen und B3-Bedingungen (80 °C).

| | Verhältnis EEW/AHEW | R1 [N/mm$^2$] | B3 80 °C [N/mm$^2$] |
|---|---|---|---|
| Beispiel 1.1 | 1,05:1 | 33,6 | 20,0 |
| Beispiel 1.2 | 1,1:1 | 31,8 | 20,9 |
| Beispiel 1.3 | 1,15:1 | 31,3 | 21,4 |
| Vergleichsbeispiel 1 | 1:1 | 32,0 | 19,8 |
| Beispiel 2.1 | 1,05:1 | 34,1 | 20,6 |
| Beispiel 2.2 | 1,1:1 | 33,1 | 18,2 |
| Vergleichsbeispiel 2 | 1:1 | 33,4 | 19,3 |
| Beispiel 3.1 | 1,05:1 | 35,0 | 12,1 |
| Beispiel 3.2 | 1,1:1 | 34,5 | 10,8 |
| Vergleichsbeispiel 3 | 1:1 | 34,3 | 10,5 |

(fortgesetzt)

| | Verhältnis EEW/AHEW | R1 [N/mm$^2$] | B3 80 °C [N/mm$^2$] |
|---|---|---|---|
| Beispiel 4.1 | 1,05:1 | 32,2 | 7,2 |
| Beispiel 4.2 | 1,1:1 | 31,4 | 6,7 |
| Vergleichsbeispiel 4 | 1:1 | 31,6 | 6,1 |

Die ermittelten Auszugswerte zeigen für die erfindungsgemäßen Beispiele, dass ein nicht-stöchiometrisches Verhältnis der Epoxidharzkomponente (A) und der Härterkomponente (B) in Bezug auf ihre EEW bzw. AHEW-Werte zu einer Erhöhung der Lastwerte bei Standardbedingungen (R1) führt. Gleichzeitig wirkt sich das nicht stöchiometrische Verhältnis positiv auf die ermittelten Lastwerte bei erhöhten Temperaturen aus, hier gezeigt in B3-Auszugsversuchen bei 80 °C.

**Patentansprüche**

1. Mehrkomponenten-Zusammensetzung für Befestigungszwecke umfassend eine Epoxidharzkomponente (A) mit einem Epoxidäquivalentwert (EEW) enthaltend wenigstens ein härtbares Epoxidharz und
eine Härterkomponente (B) mit einem Aminwasserstoffäquivalentwert (AHEW) enthaltend mindestens ein gegenüber Epoxidgruppen reaktives Amin, wobei die Epoxidharzkomponente (A) und die Härterkomponente (B) reaktionsinhibierend getrennt voneinander vorliegen, **dadurch gekennzeichnet, dass** das Verhältnis der Epoxidharzkomponente (A) und der Härterkomponente (B) bezogen auf EEW und AHEW nicht stöchiometrisch ist.

2. Mehrkomponenten-Zusammensetzung gemäß Anspruch 1, **dadurch gekennzeichnet, dass** das Verhältnis der Epoxidharzkomponente (A) zu der Härterkomponente (B) bezogen auf EEW und AHEW > 1:1 ist.

3. Mehrkomponenten-Zusammensetzung gemäß Anspruch 2, **dadurch gekennzeichnet, dass** das Verhältnis der Epoxidharzkomponente (A) zu der Härterkomponente (B) bezogen auf EEW und AHEW im Bereich von 1,01:1 bis 2:1, vorzugsweise 1,01:1 bis 1,50:1, liegt.

4. Mehrkomponenten-Zusammensetzung gemäß einem der vorhergehenden Ansprüche, **dadurch gekennzeichnet, dass** die Mehrkomponenten-Zusammensetzung eine Zweikomponenten-Zusammensetzung ist.

5. Mehrkomponenten-Zusammensetzung gemäß einem der vorhergehenden Ansprüche, **dadurch gekennzeichnet, dass** die Härterkomponente (B) einen AHEW-Wert von 30 bis 500 g/EQ aufweist.

6. Mehrkomponenten-Zusammensetzung gemäß einem der vorhergehenden Ansprüche, **dadurch gekennzeichnet, dass** die Epoxidharzkomponente (A) einen EEW-Wert ≥ 200 g/eq. aufweist.

7. Mehrkomponenten-Zusammensetzung gemäß einem der vorhergehenden Ansprüche, **dadurch gekennzeichnet, dass** die Härterkomponente (B) mindestens ein anorganisches Salz, vorzugsweise $Ca(NO_3)_2$ und/oder $Ca(CF_3SO_3)_2$ als Beschleuniger umfasst.

8. Mehrkomponenten-Zusammensetzung gemäß einem der vorhergehenden Ansprüche, **dadurch gekennzeichnet, dass** die Härterkomponente (B) mindestens ein tertiäres Amin und/oder ein styrolisiertes Phenol als Beschleuniger umfasst.

9. Mehrkomponenten-Zusammensetzung gemäß einem der vorhergehenden Ansprüche, **dadurch gekennzeichnet, dass** das härtbare Epoxidharz ein Diglycidylether von Bisphenol A oder von Bisphenol F oder ein Gemisch davon umfasst.

10. Mörtelmasse enthaltend eine physikalische Mischung der Komponenten der Mehrkomponenten-Zusammensetzung gemäß einem der Ansprüche 1 bis 9.

11. Chemischer Dübel enthaltend eine gehärtete Mörtelmasse gemäß Anspruch 10.

**12.** Verankerungsstelle umfassend einen chemischen Dübel gemäß Anspruch 11.

**13.** Verfahren zur chemischen Befestigung von Konstruktionselementen in Bohrlöchern, wobei zur chemischen Befestigung eine Mehrkomponenten-Zusammensetzung gemäß einem der Ansprüche 1 bis 9 oder eine Mörtelmasse gemäß Anspruch 10 verwendet wird.

**14.** Verwendung eines nicht stöchiometrischen Verhältnisses bezogen auf die EEW- und AHEW- Werte einer Epoxidharzkomponente (A) enthaltend wenigstens ein härtbares Epoxidharz und einer Härterkomponente (B) enthaltend mindestens ein gegenüber Epoxidgruppen reaktives Amin zur Verbesserung der Auszugsfestigkeit eines chemischen Dübels, insbesondere zur Verbesserung der Auszugsfestigkeit bei erhöhten Temperaturen.

**15.** Verwendung gemäß Anspruch 14, **dadurch gekennzeichnet, dass** das Verhältnis der Epoxidharzkomponente (A) zu der Härterkomponente (B) bezogen auf EEW und AHEW >1:1 ist.

Europäisches Patentamt
European Patent Office
Office européen des brevets

# EUROPÄISCHER RECHERCHENBERICHT

Nummer der Anmeldung
EP 22 18 6009

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 176 180 B1 (ILLINOIS TOOL WORKS [US]) 23. Februar 2005 (2005-02-23)<br>* Anspruch 1 *<br>* Absatz [0036]; Anspruch 0039 *<br>* Tabelle 1 *<br>* Absatz [0022] *<br>* Abbildungen 1-3 *<br>----- | 1-15 | INV.<br>C08G59/50<br>C04B26/14<br>C08G59/68 |
| X | EP 3 733 731 A1 (HILTI AG [LI]) 4. November 2020 (2020-11-04)<br>* Ansprüche 1,13,14 *<br>* Tabellen 1-4 *<br>* Absatz [0117] *<br>----- | 1,2, 4-10,13 | |
| X | US 2019/100616 A1 (ZHOU HUI [US] ET AL) 4. April 2019 (2019-04-04)<br>* Anspruch 1 *<br>* Tabellen 3-5 *<br>----- | 1-5,8,9 | |
| A | US 2016/355437 A1 (GRUN JURGEN [DE] ET AL) 8. Dezember 2016 (2016-12-08)<br>* Anspruch 1; Beispiel 1 *<br>* Absatz [0081] *<br>----- | 1-15 | RECHERCHIERTE SACHGEBIETE (IPC)<br>C08G<br>C04B |
| A | WO 2008/155617 A1 (PROSPECTION & INVENTIONS [FR]; BUCQUET BARBARA [FR] ET AL.) 24. Dezember 2008 (2008-12-24)<br>* Anspruch 1; Abbildungen 1-7 *<br>----- | 1-15 | |

Der vorliegende Recherchenbericht wurde für alle Patentansprüche erstellt

1

| Recherchenort | Abschlußdatum der Recherche | Prüfer |
|---|---|---|
| Den Haag | 25. Januar 2023 | O'Sullivan, Timothy |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 18 6009

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-01-2023

| Im Recherchenbericht angeführtes Patentdokument | Datum der Veröffentlichung | Mitglied(er) der Patentfamilie | Datum der Veröffentlichung |
|---|---|---|---|
| EP 1176180 B1 | 23-02-2005 | AR 029963 A1 | 23-07-2003 |
| | | AT 289626 T | 15-03-2005 |
| | | AU 779815 B2 | 10-02-2005 |
| | | BR 0103082 A | 26-02-2002 |
| | | CA 2353736 A1 | 26-01-2002 |
| | | CN 1334305 A | 06-02-2002 |
| | | DE 60109003 T2 | 14-07-2005 |
| | | DK 1176180 T3 | 27-06-2005 |
| | | EP 1176180 A1 | 30-01-2002 |
| | | ES 2238404 T3 | 01-09-2005 |
| | | HK 1044791 A1 | 01-11-2002 |
| | | JP 2002097446 A | 02-04-2002 |
| | | KR 20020010510 A | 04-02-2002 |
| | | MX PA01007535 A | 05-04-2002 |
| | | NZ 513137 A | 20-12-2002 |
| | | PT 1176180 E | 29-07-2005 |
| | | SG 92810 A1 | 19-11-2002 |
| | | TW I300089 B | 21-08-2008 |
| EP 3733731 A1 | 04-11-2020 | AU 2020264706 A1 | 30-09-2021 |
| | | CA 3132925 A1 | 05-11-2020 |
| | | CN 113631624 A | 09-11-2021 |
| | | EP 3733731 A1 | 04-11-2020 |
| | | EP 3962984 A1 | 09-03-2022 |
| | | JP 2022532049 A | 13-07-2022 |
| | | KR 20220002400 A | 06-01-2022 |
| | | US 2022213259 A1 | 07-07-2022 |
| | | WO 2020221608 A1 | 05-11-2020 |
| US 2019100616 A1 | 04-04-2019 | BR 112018067675 A2 | 09-04-2019 |
| | | CA 3012354 A1 | 21-12-2017 |
| | | CN 108699219 A | 23-10-2018 |
| | | DK 3472221 T3 | 17-01-2022 |
| | | EP 3472221 A1 | 24-04-2019 |
| | | ES 2901226 T3 | 21-03-2022 |
| | | JP 6951355 B2 | 20-10-2021 |
| | | JP 2019519620 A | 11-07-2019 |
| | | KR 20190020288 A | 28-02-2019 |
| | | PL 3472221 T3 | 14-03-2022 |
| | | PT 3472221 T | 30-11-2021 |
| | | US 2019100616 A1 | 04-04-2019 |
| | | WO 2017218934 A1 | 21-12-2017 |
| US 2016355437 A1 | 08-12-2016 | BR 112015013087 A2 | 11-07-2017 |
| | | CN 104837887 A | 12-08-2015 |
| | | DE 102013113465 A1 | 12-06-2014 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 22 18 6009

In diesem Anhang sind die Mitglieder der Patentfamilien der im obengenannten europäischen Recherchenbericht angeführten Patentdokumente angegeben. Die Angaben über die Familienmitglieder entsprechen dem Stand der Datei des Europäischen Patentamts am Diese Angaben dienen nur zur Unterrichtung und erfolgen ohne Gewähr.

25-01-2023

| Im Recherchenbericht angeführtes Patentdokument | Datum der Veröffentlichung | Mitglied(er) der Patentfamilie | Datum der Veröffentlichung |
|---|---|---|---|
| | | DE 202013012362 U1 | 21-06-2016 |
| | | DE 202013012732 U1 | 18-12-2018 |
| | | DE 202013012733 U1 | 12-12-2018 |
| | | EP 2931782 A1 | 21-10-2015 |
| | | ES 2615901 T3 | 08-06-2017 |
| | | JP 6395721 B2 | 26-09-2018 |
| | | JP 2016508162 A | 17-03-2016 |
| | | RU 2015128062 A | 16-01-2017 |
| | | US 2015307702 A1 | 29-10-2015 |
| | | US 2016355437 A1 | 08-12-2016 |
| | | WO 2014090382 A1 | 19-06-2014 |
| WO 2008155617 A1 | 24-12-2008 | EP 2006551 A1 | 24-12-2008 |
| | | FR 2917792 A1 | 26-12-2008 |
| | | TW 200925440 A | 16-06-2009 |
| | | WO 2008155617 A1 | 24-12-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1716195 A
- EP 2931782 A
- EP 2826796 A1
- EP 3392287 A1
- EP 3000792 A1
- WO 2020058015 A1
- EP 0645408 A1


### In der Beschreibung aufgeführte Nicht-Patentliteratur


- IUPAC Compendium of Chemical Terminology. **A. D. MCNAUGHT ; A. WILKINSON.** Gold Book. Blackwell Scientific Publications, 1997
- **MICHAEL DORNBUSCH ; ULRICH CHRIST ; ROB RASING.** Epoxidharze. Vincentz Network GmbH & Co KG, 2015